# EUROPÄISCHE PATENTANMELDUNG

(11) **EP 3 670 294 A1**
(43) Veröffentlichungstag der Anmeldung: **24.06.2020**
(21) Anmeldenummer: 19210530.2
(22) Anmeldetag: 21.11.2019
(51) Int. Cl.: B62B 5/02, B62B 5/04

(54) **TRANSPORTVORRICHTUNG UND VERFAHREN ZUM TRANSPORT EINER LAST AUF EINER TREPPE**

(30) Priorität: 19.12.2018 DE 102018132976
(71) Anmelder: AAT Alber Antriebstechnik GmbH, 72458 Albstadt (DE)
(72) Erfinder: Colditz, Markus, 72458 Albstadt (DE); Pfister, Gerhard, 72461 Albstadt-Onstmettingen (DE)
(74) Vertreter: Kohler Schmid Möbus Patentanwälte

(57) **Zusammenfassung**

Die Erfindung betrifft eine Transportvorrichtung (10), insbesondere Sackkarre, zum Transport einer Last (13) auf einer Treppe (36) mit einem Tragrahmen (12) zur Aufnahme der Last (13), mit wenigstens einem in einem unteren Bereich des Tragrahmens (12) angeordneten Laufrad (14) und mit einer vorsteigenden Treppensteigvorrichtung (16) zum Auf- und/oder Abwärtssteigen einer Treppe (36), wobei die Treppensteigvorrichtung (16) ein kurbelgetriebenes Steigbein (20) umfasst. Sie ist dadurch gekennzeichnet, dass die Treppensteigvorrichtung (16) eine steuerbare Bremsvorrichtung (28) umfasst, wobei die Bremsvorrichtung (28) eingerichtet ist, das Laufrad (14) steuerbar freizugeben, zu bremsen und/oder zu blockieren. Weiterhin betrifft die Erfindung ein Verfahren zum Transport einer Last (13) auf einer Treppe (36). Der erfindungsgemäße Gegenstand sowie das erfindungsgemäße Verfahren ermöglichen einen besonders sicheren Transport der Last (13) auf der Treppe (36).

## Beschreibung

Die Erfindung geht aus von einer Transportvorrichtung, insbesondere Sackkarre, zum Transport einer Last auf einer Treppe mit einem Tragrahmen zur Aufnahme der Last, mit wenigstens einem in einem unteren Bereich des Tragrahmens angeordneten Laufrad und mit einer vorsteigenden Treppensteigvorrichtung zum Auf- und/oder Abwärtssteigen einer Treppe, wobei die Treppensteigvorrichtung wenigstens ein kurbelgetriebenes Steigbein umfasst.

Beim Transport von Lasten stellt die Überwindung von Treppen eine besondere Herausforderung dar. Zu diesem Zweck sind Transportvorrichtungen, insbesondere Sackkarren, entwickelt worden, die eine Treppensteigvorrichtung zum Auf- und/oder Abwärtssteigen einer Treppe aufweisen. Insbesondere sind Transportvorrichtungen bekannt, die ein kurbelgetriebenes Steigbein aufweisen, das speziell beim Auf- und/oder Abwärtssteigen zum Einsatz kommt, während ansonsten, beispielsweise in der Ebene, die Transportvorrichtung lediglich mittels des oder der Laufräder fortbewegt wird.

Soll eine Last auf einer Treppe aufwärts transportiert werden, so ist bei vorsteigenden Treppensteigvorrichtungen vorgesehen, dass das Steigbein zunächst eine jeweils höhergelegene Treppenstufe der Treppe erklimmt und sodann die übrige Transportvorrichtung nachzieht. Mit anderen Worten steigt das Steigbein der übrigen Transportvorrichtung voraus.

Demgegenüber ist es bei nachsteigenden Treppensteigvorrichtungen vorgesehen, dass das Steigbein auf der jeweils bereits erreichten Treppenstufe aufsetzt und von dort aus zunächst die übrige Transportvorrichtung nach oben schiebt, bis diese die nächsthöhere Treppenstufe erreicht. Erst danach wird dann auch das Steigbein auf die nächsthöhere Treppenstufe gehoben. Mit anderen Worten steigt bei nachsteigenden Transportvorrichtungen das Steigbein der übrigen Transportvorrichtung nach bzw. hinterher.

Eine gattungsgemäße Transportvorrichtung ist aus der EP 1 109 710 B1 bekannt.

Die dort beschriebene Sackkarre weist eine kombinierte Freilauf- und Bremsvorrichtung auf, die bei Bewegung in eine Bewegungsrichtung eine an einem Steigbein befindliche Stützrolle freigibt und in der entgegengesetzten Bewegungsrichtung bremst. Jedoch lässt sich die Bremswirkung der Freilauf- und Bremsvorrichtung vergleichsweise einfach überwinden, sodass ein sicherer Transport einer Last auf einer Treppe nur eingeschränkt möglich ist.

Aufgabe der Erfindung ist es daher, eine Transportvorrichtung anzubieten, mit der ein Transport einer Last auf einer Treppe auf besonders sichere Weise möglich ist.

Gelöst wird die Aufgabe durch eine Transportvorrichtung, insbesondere Sackkarre, zum Transport einer Last auf einer Treppe mit einem Tragrahmen zur Aufnahme der Last, mit wenigstens einem in einem unteren Bereich des Tragrahmens angeordneten Laufrad und mit einer vorsteigenden Treppensteigvorrichtung zum Auf- und/oder Abwärtssteigen einer Treppe, wobei die Treppensteigvorrichtung wenigstens ein kurbelgetriebenes Steigbein umfasst, wobei die Treppensteigvorrichtung eine steuerbare Bremsvorrichtung umfasst, wobei die Bremsvorrichtung eingerichtet ist, das Laufrad steuerbar freizugeben, zu bremsen und/oder zu blockieren.

Mithilfe einer solchen Treppensteigvorrichtung kann eine Last eine Treppe in Auf- und/oder Abwärtsrichtung auf besonders sichere Weise transportiert werden. Dazu ermöglicht zunächst die auf die Laufräder wirkende Bremsvorrichtung, dass die Treppensteigvorrichtung mit einer vergleichsweise starken Bremskraft gebremst bzw. an einer Position auf einer Treppenstufe der zu überwindenden Treppe gehalten werden kann.

Da das Laufrad üblicherweise einen wesentlich größeren Durchmesser aufweist als beispielsweise die eingangs beschriebene Stützrolle, lässt sich hierzu ein besonders starkes Bremsdrehmoment erzeugen.

Da die Bremsvorrichtung steuerbar ausgebildet ist, d. h. da die von der Bremsvorrichtung erzeugte Bremswirkung bzw. Blockierwirkung steuerbar ist, lässt sich die Transportvorrichtung durch gezieltes Bremsen beziehungsweise Blockieren der Laufräder in Abhängigkeit von der Position der Transportvorrichtung, insbesondere der Position des Laufrads auf der Treppenstufe, sichern. Nichtsdestotrotz ist es möglich, durch Freigabe des Laufrads die Transportvorrichtung uneingeschränkt, insbesondere in beliebige Richtungen, auf der Treppe bzw. der Treppenstufe zu rangieren, insbesondere solange die Transportvorrichtung ausreichend weit von der Treppenstufenkante der Treppenstufe entfernt bleibt.

Denkbar ist insbesondere, dass die Treppensteigvorrichtung eine Positionserfassungsvorrichtung aufweist, die eingerichtet ist, die Position des Laufrads relativ zu einer Treppenstufe zu detektieren, wobei die Positionserfassungsvorrichtung vorzugsweise eingerichtet ist zu detektieren, ob sich das Laufrad in einem vordefinierten Kantenbereich um eine Treppenstufenkante befindet. Somit kann zur Steuerung der Bremsvorrichtung die Position des Laufrads mittels der Positionserfassungsvorrichtung erfasst werden. Der vordefinierte Kantenbereich kann einen Teil der Treppenstufe umfassen, bei dem ein erhöhtes Risiko besteht, dass ein in diesem befindliches Laufrad von der Treppenstufe abgleitet bzw. abstürzt. Der Kantenbereich kann dazu einen Randbereich der Treppenstufe umfassen.

Wird beispielsweise detektiert, dass das Laufrad sich in dem vordefinierten Kantenbereich befindet, kann mittels der Bremsvorrichtung das Laufrad blockiert werden. Damit kann die Transportvorrichtung an dieser Position angehalten beziehungsweise gesichert werden. Ein (insbesondere unkontrollierter) Absturz von der jeweiligen Treppenstufe lässt sich somit verhindern. Dabei ist auch denkbar, dass die Positionserfassungsvorrichtung die Position des Laufrads unmittelbar, beispielsweise als Abstand zur Treppenstufenkante, erfasst. Alternativ oder ergänzend ist es auch denkbar, dass die Positionserfassungsvorrichtung die Position mittelbar erfasst, beispielsweise indem sie die Lage und/oder Position der Transportvorrichtung, insbesondere des Tragrahmens, erfasst. Anschließend kann aus dieser Lage und/oder aus dieser Position auf die Position des Laufrads und/oder der Transportvorrichtung geschlossen werden.

Bei einer besonders zuverlässigen Ausführungsform der Erfindung ist vorgesehen, dass die Positionserfassungsvorrichtung als Tastarm, vorzugsweise mit einer an einem freien Ende des Tastarms angeordneten Tastrolle, ausgebildet ist und/oder einen solchen aufweist. Der Tastarm und/oder die Tastrolle können unter Vorspannung, beispielsweise mittels eines Federelements, angeordnet sein. Insbesondere kann der Tastarm mit seiner Tastrolle derart angeordnet sein, dass er bzw. sie bei Bodenkontakt um ein vorbestimmtes Maß aus einer Nulllage herausverlagert, insbesondere herausgedreht, ist. Ferner kann der Tastarm mit seiner Tastrolle ausgebildet sein, sich bei fehlendem Bodenkontakt in seine Nulllage zurück zu verlagern und/oder zurück zu drehen. Somit kann die Lage und/oder die Position des Tastarms und/oder der Tastrolle als Indikator eines etwaigen Bodenkontakts des Laufrads dienen.

Durch relativen Versatz des Tastarms und/oder der Tastrolle relativ zum Aufsetzpunkt des Laufrads kann diese Lage und/oder diese Position auch als Indikator dienen zu detektieren, ob sich das Laufrad im vordefinierten Kantenbereich oder sogar außerhalb der Treppenstufe befindet oder ob sich das Laufrad weiter im Innenbereich der Treppenstufe - und damit in einem sicheren Bereich - befindet.

Ist die Positionserfassungsvorrichtung zur Steuerung der Bremsvorrichtung mit dieser wirkverbunden, so kann die Positionserfassungsvorrichtung die Bremsvorrichtung steuern. Die Wirkverbindung kann mechanisch ausgebildet sein; dann kann die Bremsvorrichtung, insbesondere ein Brems- und/oder Klemmkörper der Bremsvorrichtung, nichtelektrisch, insbesondere mechanisch, steuerbar sein. Alternativ kann die Wirkverbindung auch elektrisch ausgebildet sein.

Insbesondere kann die Positionserfassungsvorrichtung, insbesondere mittels der Wirkverbindung, eingerichtet sein, das Laufrad mittels der Bremsvorrichtung zu bremsen und/oder zu blockieren, wenn sie detektiert, dass sich das Laufrad im vordefinierten Kantenbereich befindet und/oder dass das Laufrad nicht auf einer Treppenstufe aufsitzt. Ansonsten kann die Positionserfassungsvorrichtung das Laufrad freigeben.

Alternativ oder ergänzend ist auch denkbar, dass die Positionserfassungsvorrichtung ein Messsignal generiert. Eine Steuereinheit zur Auswertung des Messsignals kann weiter vorgesehen sein. Die Steuereinheit kann dann eingerichtet sein, die Bremsvorrichtung in Abhängigkeit vom ausgewerteten Messsignal steuern. Das Messsignal kann beispielsweise das Ausmaß einer Auslenkung des Tastarms aus seiner Nulllage repräsentieren.

Ist die Bremsvorrichtung als Klemmkörperbremse ausgebildet und/oder weist sie eine solche auf, lassen sich auf einfache Weise starke Bremskräfte und/oder eine Blockierung des Laufrads erreichen.

Besonders vorteilhaft ist es, wenn die Transportvorrichtung wenigstens zwei Laufräder aufweist, wobei jedes Laufrad durch eine ihm zugeordnete Bremsvorrichtung der Treppensteigvorrichtung unabhängig vom anderen Laufrad steuerbar freigebbar, bremsbar und/oder blockierbar ist. Somit lässt sich jedes Laufrad für sich, insbesondere unabhängig von dem oder den anderen Laufrädern freigeben, bremsen und/oder blockieren. Erreicht beispielsweise eines von zwei Laufrädern den vordefinierten Kantenbereich, kann dieses blockiert werden, während das andere Laufrad, das sich im absturzsicheren, inneren Bereich der Treppenstufe und nicht im vordefinierten Kantenbereich befindet, weiter freigegeben und damit weiter frei rangierbar bleiben kann.

Auch kann die Transportvorrichtung wenigstens zwei, jeweils einem der Laufräder zugeordnete Positionserfassungsvorrichtungen zur unabhängigen Erfassung der Position des jeweils zugeordneten Laufrads aufweisen. Somit lässt sich die Position jedes der Laufräder einzelnen erfassen. Anhand dieser erfassten Positionen können dann die Laufräder - jedes für sich - analog zum oben beschriebenen Vorgehen für ein einzelnes Laufrad gesteuert, insbesondere freigegeben, gebremst und/oder blockiert werden.

Am Steigbein kann ein starrer Steigfuß angeordnet sein, wobei der Steigfuß, vorzugsweise an wenigstens einer Bodenkontaktseite, aus rutschfestem Material, insbesondere einer Gummierung, ausgebildet sein und/oder ein solches aufweisen kann. Somit kann der Steigfuß sicher, insbesondere gegen Wegrutschen geschützt, auf die jeweils nächste Treppenstufe aufgesetzt werden bzw. sein. Ein solcher Steigfuß kann somit besonders einfach aufgebaut sein. Eine zusätzliche Bremsvorrichtung zur Bremsung eines - beispielsweise als Steigrolle ausgebildeten - Steigfußes kann sich somit am übrigen. Dazu kann der Steigfuß an einem freien Ende des Steigbeins angeordnet sein. Er kann eine im Querschnitt ovale, insbesondere nichtkreisförmige, Form aufweisen.

Eine Steuerelementeanordnung zur Steuerung des Treppenaufstiegs und/oder Treppenabstiegs kann in einem Bereich eines Griffelements des Tragrahmens angeordnet sein. Somit lässt sich die Steuerelementeanordnung jederzeit von einem Benutzer der Transportvorrichtung bedienen. Sie lässt sich insbesondere unabhängig davon, ob auf der Transportvorrichtung eine Last geladen ist oder nicht, vom Benutzer gut erreichen. Der Treppensteigvorgang lässt sich somit in jeder Phase kontrollieren.

Insbesondere kann die Steuerelementeanordnung ein Steuerelement, insbesondere einen Ein-/Ausschalter, einen Richtungswahlschalter, ein Drehwahlelement zur Geschwindigkeitseinstellung und/oder einen Starttaster, zur Steuerung des Starts, des Endes und/oder der Geschwindigkeit des Treppenauf- und/oder -abstiegs umfassen. Ein Ein/Aus-Schalter der Steuerelementeanordnung kann insbesondere auch als Notstopp nutzbar sein.

Bevorzugt kann die Geschwindigkeit des Treppenauf- und/oder -abstiegs, insbesondere mittels des Drehwahlelements, stufenlos einstellbar sein. Dazu kann das Drehwahlelement als stufenlos einstellbares Steuerelement, beispielsweise als Potentiometer, ausgebildet sein.

Eine Antriebseinheit der Treppensteigvorrichtung kann einen elektrischen Motor aufweisen. Sie kann eingerichtet sein, das oder die Laufräder anzutreiben.

Die Antriebseinheit der Treppensteigvorrichtung kann alternativ oder ergänzend eingerichtet sein, das Steigbein anzutreiben. Dazu kann an der Antriebseinheit ein Zykloidgetriebe, insbesondere am Abtrieb der Antriebseinheit, angeordnet sein. Ein solches Zykloidgetriebe weist im Vergleich zu herkömmlichen Getrieben einen besseren Wirkungsgrad auf. Zudem kann es konstruktiv einfacher ausgebildet sein, da es in der Regel aus weniger Teilen im Vergleich zu einem herkömmlichen Getriebe besteht.

Das Steigbein kann teleskopierbar sein. Somit kann seine Länge veränderbar sein. Dies ermöglicht es, auch Treppenstufen mit im Vergleich zu herkömmlichen Treppenstufen höheren Stufenhöhen zu überwinden. Die Länge des Steigbeins kann durch den Kurbeltrieb gesteuert sein.

Die Treppensteigvorrichtung kann wenigstens zwei Steigfüße aufweisen. Beispielsweise kann die Treppensteigvorrichtung wenigstens zwei Steigbeine aufweisen, an denen jeweils ein oder mehrere Steigfüße angeordnet sind. Durch mehrere, vorzugsweise voneinander beabstandete, Steigfüße kann der Treppensteigvorgang besonders kippsicher erfolgen. Die Kippsicherheit lässt sich noch weiter verbessern, wenn die wenigstens zwei Steigfüße über wenigstens ein Verbindungsstück unmittelbar und/oder mittelbar miteinander verbunden sind. Dazu kann das Verbindungsstück als Welle ausgebildet sein. Das Verbindungsstück kann durch die Treppensteigvorrichtung, insbesondere durch die Antriebseinheit, hindurch reichen oder diese überspannen. Insbesondere kann das Verbindungsstück wenigstens zwei Steigbeine mit jeweils einem oder mehreren Steigfüßen miteinander verbinden. Somit kann das Verbindungsstück die Steigfüße der wenigstens zwei Steigbeine mittelbar verbinden. Zur weiteren Verbesserung der Kippsicherheit kann das Verbindungsstück eine zusätzliche, insbesondere eine zweite, mittelbare und/oder unmittelbare Verbindung zwischen wenigstens zwei Steigfüßen bilden.

Die Treppensteigvorrichtung kann insbesondere in einem Einzelstufenmodus betreibbar sein. Die Treppensteigvorrichtung kann dazu eingerichtet sein, im Einzelstufenmodus mit jedem Start jeweils nur eine Treppenstufe nach oben oder nach unten zu steigen.

Der Start kann allgemein durch den Benutzer mittels eines der Steuerelemente ausgelöst sein.

Alternativ oder ergänzend kann die Treppensteigvorrichtung auch in einem Mehrstufenmodus, insbesondere in einem Dauersteigmodus, betreibbar sein. Die Treppensteigvorrichtung kann dazu eingerichtet sein, im Mehrstufenmodus mit jedem Start jeweils nacheinander mehrere Treppenstufen, insbesondere im Dauersteigmodus bis zum Ende der Treppe und/oder bis zu einem Stopp, nach oben oder nach unten zu steigen. Der Stopp kann allgemein durch den Benutzer mittels eines der Steuerelemente ausgelöst sein.

Ist die Treppensteigvorrichtung eingerichtet, innerhalb eines Steigzyklus einen Kurbelantrieb des kurbelgetriebenen Steigbeins mit wenigstens zwei verschiedenen Geschwindigkeiten anzutreiben, so lässt sich ein besonders sanfter Steigvorgang erreichen. Ein Steigzyklus kann insbesondere das Steigen von einer zu einer benachbarten Treppenstufe umfassen und/oder diesem entsprechen.

In den Rahmen der Erfindung fällt des Weiteren ein Verfahren zum Transport einer Last auf einer Treppe mit einer Transportvorrichtung, insbesondere einer Sackkarre, mit einem Tragrahmen zur Aufnahme der Last, mit wenigstens einem in einem unteren Bereich des Tragrahmens angeordneten Laufrad und mit einer vorsteigenden Treppensteigvorrichtung zum Auf- und/oder Abwärtssteigen einer Treppe, wobei die Treppensteigvorrichtung ein kurbelgetriebenes Steigbein umfasst, wobei das Laufrad mittels einer steuerbaren Bremsvorrichtung gebremst und/oder blockiert wird, sobald sich das Laufrad auf einer Treppenstufe der Treppe in einem vordefinierten Kantenbereich um eine Treppenstufenkante der Treppenstufe befindet und/oder diesen erreicht. Das Laufrad kann ferner mittels der steuerbaren Bremsvorrichtung freigegeben werden, wenn es sich außerhalb des Kantenbereichs befindet, insbesondere wenn es sich außerhalb des Kantenbereichs auf der Treppenstufe befindet. Somit lässt sich eine Last besonders sicher auf einer Treppe bewegen, da die Transportvorrichtung zum Transport der Last dann gebremst und/oder blockiert sein kann, wenn sie in einen besonderen Gefahrenbereich eintritt und/oder sich in einem solchen befindet.

Die Erfassung der Position der Treppensteigvorrichtung, insbesondere des Laufrads, kann mittels einer Positionsdetektionsvorrichtung erfolgen. Insbesondere kann die Positionsdetektionsvorrichtung die Position mittels eines Tastarms erfassen. Die steuerbare Bremsvorrichtung kann mittels der Positionsdetektionsvorrichtung gesteuert werden.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine schematische Seitenansicht eines Ausschnitts einer Transportvorrichtung mit einer Treppensteigvorrichtung auf einer Treppenstufe;
- Fig. 1a: einen Ausschnitt eines Tragrahmens der Transportvorrichtung gemäß Fig. 1 mit einer im Bereich eines Griffelements angeordneten Steuerelementeanordnung ;
- Fig. 2a bis 2f: das Verfahren, um mittels der Transportvorrichtung gemäß Fig. 1 eine Treppenstufe abwärts zu steigen, in sechs Phasen;
- Fig. 3a bis 3f: das Verfahren, um mittels der Transportvorrichtung gemäß Fig. 1 eine Treppenstufe aufwärts zu steigen, in sechs Phasen;
- Fig. 4: eine schematische Draufsicht auf die Transportvorrichtung gemäß Fig. 1 mit einer Ein-/Ausgabeeinheit;
- Fig. 5: eine schematische Draufsicht auf die Transportvorrichtung gemäß Fig. 1 mit einer alternativen Ausführungsform einer Ein-/Ausgabeeinheit;
- Fig. 6: eine schematische Draufsicht auf eine Seite einer Steuerelementeanordnung der Transportvorrichtung gemäß Fig. 1 und
- Fig. 7: eine schematische Draufsicht auf die der Seite gemäß Fig. 6 gegenüberliegenden Seite der Steuerelementeanordnung gemäß Fig. 6.

Zur Erleichterung des Verständnisses der Erfindung werden im Folgenden für sich jeweils funktional entsprechende Elemente jeweils gleiche Bezugszeichen verwendet.

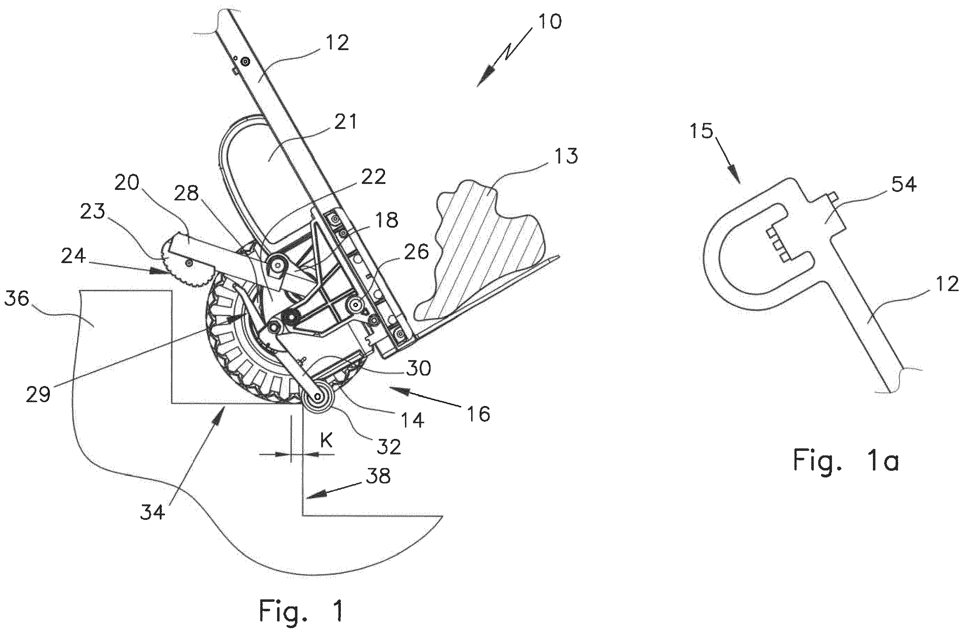

**Fig. 1** zeigt ausschnittsweise eine Transportvorrichtung **10.** Die Transportvorrichtung 10 ist als Sackkarre ausgebildet. Sie weist einen Tragrahmen **12** und zwei unten am Tragrahmen 12 angeordnete Laufräder **14** auf. In der Seitenansicht gemäß Fig. 1 ist nur eines der beiden Laufräder 14 zu erkennen.

Die Transportvorrichtung 10 ist mit einer zu transportierenden Last **13** beladen.

Die Transportvorrichtung 10 weist ferner eine vorsteigende Treppensteigvorrichtung **16** auf. Die Treppensteigvorrichtung 16 umfasst zwei über jeweils einen Kurbelantrieb **18** angetriebene Steigbeine **20,** von denen lediglich ein Steigbein 20 in der Seitenansicht gemäß Fig. 1 - sowie in allen anderen, noch zu beschreibenden Seitenansichten - erkennbar ist.

Die Steigbeine 20 sind, abgesehen von einer spiegelsymmetrischen Gestaltung, einander entsprechend ausgebildet und angeordnet und werden auch in sich entsprechenden Weisen angetrieben, so dass im Folgenden lediglich der Aufbau und der Antrieb eines der beiden Steigbeine 20 mit seinem jeweiligen Kurbelantrieb 18 beschrieben wird.

Der jeweilige Kurbelantrieb 18 ist mittels einer von einem Akkumulator **21** versorgten Antriebseinheit **22** antreibbar. Die Antriebseinheit 22 umfasst im Wesentlichen einen elektrischen Antriebsmotor und eine Steuerelektronik (beide in Fig. 1 nicht darstellbar), welche über ein Spiralkabel (ebenfalls nicht sichtbar) elektrisch mit einer Steuerelementeanordnung 54 (siehe folgende Fig. 1a) verbunden ist. Die Steuerelektronik und/oder der Antriebsmotor können als Module und/oder modular ausgebildet sein, so dass diese und/oder Komponenten dieser auch in weiteren, insbesondere ähnlichen, Transportvorrichtungen verwendbar sind.

An einem freien Ende des Steigbeins 20 ist ein Steigfuß **23** angeordnet. Der Steigfuß 23 weist eine im Wesentlichen ovale Form auf. Er ist an seiner Außenseite, insbesondere in seinem Bodenkontaktbereich, mit einer Gummierung **24** überzogen.

An dem dem freien Ende des Steigbeins 20 gegenüberliegenden Ende ist das Steigbein 20 an einem Lagerpunkt **26** drehbar am Tragrahmen 12 gelagert. Das Steigbein 20 ist längenveränderlich, insbesondere teleskopierbar, ausgebildet. Dazu ist es mit einem Kolben in einem Zylinder, welcher am Lagerpunkt 26 drehbar gelagert ist, ausgestattet. Der Steigfuß 23 ist somit, angetrieben durch den Kurbelantrieb 18, auf einer nichtelliptischen, insbesondere einer näherungsweise konvexkonkav-gekrümmten, Bahn bewegbar.

Jedem der beiden Laufräder 14 ist jeweils eine Bremsvorrichtung **28** sowie eine Positionserfassungsvorrichtung **29** zugeordnet. Aus Darstellungsgründen sind in Fig. 1 jeweils nur eine der beiden Bremsvorrichtungen 28 sowie eine der beiden Positionserfassungsvorrichtungen 29 erkennbar.

Die Bremsvorrichtungen 28 sind als Klemmkörperbremsen ausgebildet. Dazu weisen sie einen in einer Bremstrommel angeordneten Klemmkörper mit einem auf diesem aufgebrachten Bremsbelag zur Bremsung und/oder Blockierung des jeweils zugeordneten Laufrads 14 auf.

Jede der Positionserfassungsvorrichtungen 29 weist einen Tastarm **30** auf, an dessen einem freien Ende jeweils eine Tastrolle **32** drehbar angeordnet ist. Der Tastarm 30 ist mittels eines (in Fig. 1 nicht dargestellten) Federelements drehbar am Transportrahmen 12 gelagert und durch das Federelement vorgespannt.

Die Positionserfassungsvorrichtungen 29 sind ferner mechanisch mit der demselben Laufrad 14 zugeordneten Bremsvorrichtung 28 mechanisch wirkverbunden. Somit lassen sich die Bremsvorrichtungen 28 - und damit die jeweils zugeordneten Laufräder 14, mittels der Positionserfassungsvorrichtungen 29 einzeln und unabhängig voneinander steuern.

Befindet sich insbesondere der jeweilige Tastarm 30 in seiner - in Fig. 1 dargestellten - Ausgangslage bzw. Nulllage, so ist die jeweilige Bremsvorrichtung 28 derart gesteuert, dass das jeweils zugeordnete Laufrad 14 blockiert ist. Ist dagegen der Tastarm 30 um ein vorgegebenes Mindestmaß aus seiner Nulllage 30 herausgelenkt, so ist die jeweilige Bremsvorrichtung 28 derart gesteuert, dass das jeweils zugeordnete Laufrad 14 freigegeben ist.

Dabei ist in der in Fig.1 dargestellten Nulllage des Tastarms 30 die Tastrolle 32 in einem unteren Bereich des zugeordneten Laufrads 14, insbesondere in der Nähe seines tiefstgelegenen Punkts, angeordnet.

Die Transportvorrichtung 10 befindet sich auf einer Treppenstufe **34** einer Treppe **36.**

Ein Kantenbereich K in der Nähe einer Treppenkante **38** der Treppenstufe 34 reicht bis zur Treppenkante 38 und erstreckt sich über deren gesamte Breite. Der Kantenbereich K markiert denjenigen Bereich der Treppenstufe 34, in dem die Transportvorrichtung 10, insbesondere ihre Laufräder 14, vor einem Wegrutschen und/oder Abstürzen von der Treppenstufe 34 besonders zu schützen sind.

Dem erfinderischen Gedanken folgend sind die Laufräder 14, sofern sie sich in dem Kantenbereich K befinden, gebremst und/oder blockiert. Dementsprechend ist die Lage der Nulllage des jeweiligen Tastarms 30 derart eingestellt, dass sich der Tastarm 30 solange in seiner Nulllage befindet und/der weniger als das Mindestmaß von der Nulllage ausgelenkt ist, solange sich das jeweilige Laufrad 14 innerhalb des vordefinierten Kantenbereichs K - wie in Fig. 1 dargestellt - auf der Treppenstufe 34 befindet oder das Laufrad 14 die Treppe 36 nicht kontaktiert.

**Fig. 1a** zeigt einen Ausschnitt des Tragrahmens 12 der Transportvorrichtung 10 gemäß Fig. 1.

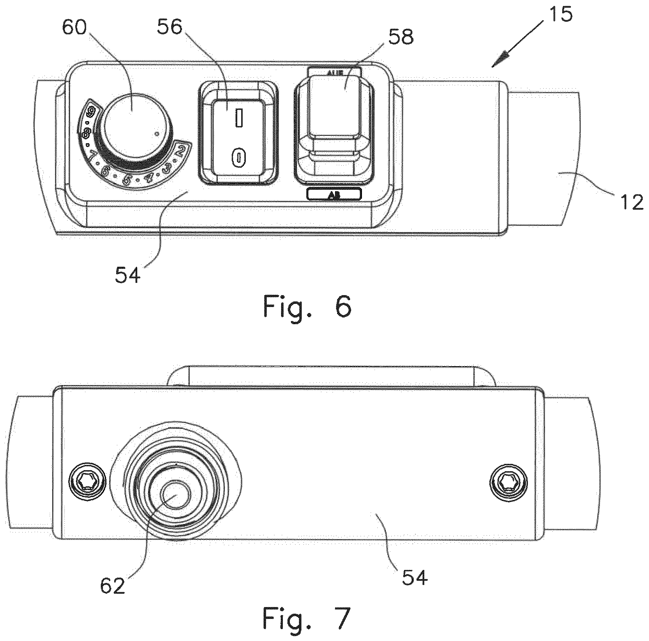

Zu erkennen ist, dass in einem oberen Bereich des Tragrahmens 12 Griffelemente **15** angeordnet sind, von denen ein Griffelement 15 in Fig. 1a abgebildet ist. Im Bereich des dargestellten Griffelements 15 befindet sich eine anhand von Fig. 6 und 7 noch näher zu erläuternde Steuerelementeanordnung **54.**

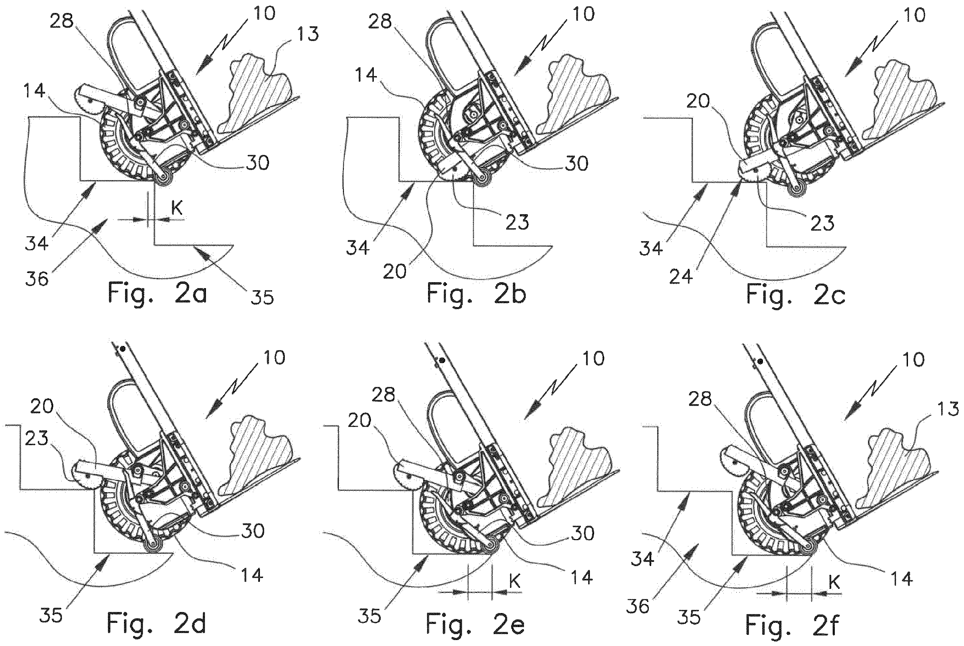

Anhand der folgenden **Fig. 2a bis 2f** soll nun das erfindungsgemäße Verfahren näher erläutert werden. Insbesondere wird aufgezeigt, wie mithilfe der Transportvorrichtung 10 die Last 13 von der Treppenstufe 34 der Treppe 36 auf eine andere, benachbarte, im Fall gemäß Fig. 2a bis 2f tiefer liegende, Treppenstufe, also abwärts, transportiert werden kann.

**Fig. 2a** zeigt dazu zunächst die Transportvorrichtung 10 auf der Treppenstufe 34 der Treppe 36 mit der Last 13 entsprechend dem Zustand gemäß Fig.1. Die Transportvorrichtung 10 mit der Last 13 soll nun eine Treppenstufe tiefer auf eine Treppenstufe **35** steigen. Die Laufräder 14 befinden sich zunächst im Kantenbereich K der Treppenstufe 34. Da sich der Tastarm 30 in seiner Nulllage befindet, sind die Laufräder 14 durch die jeweils zugeordneten Bremsvorrichtungen 28 gebremst bzw. blockiert. Somit ist ein sicherer Halt der Transportvorrichtung 10 schon in dieser Phase während des Abwärtssteigens gewährleistet. Ein Benutzer (in Fig. 2a bis 2f nicht dargestellt) der Transportvorrichtung 10 braucht lediglich die Transportvorrichtung 10 ausbalancieren.

In einem nachfolgenden Schritt gemäß **Fig. 2b** setzt das Steigbein 20 mit seinem Steigfuß 23 auf der Treppenstufe 34 auf. Da sich ansonsten an der Stellung des Tastarms 30 gegenüber dem Zustand gemäß Fig. 2a zunächst nichts weiter geändert hat, bleiben die Bremsvorrichtungen 28 weiterhin aktiviert; die Laufräder 14 bleiben gebremst bzw. blockiert.

Während der in **Fig. 2c** dargestellten Phase drückt das Steigbein 20 mit seinem Steigfuß 23 die übrige Transportvorrichtung 10 von der Treppenstufe 34 weg. Die Gummierung 24 des Steigfußes 23 verhindert dabei ein Wegrutschen von der Treppenstufe 34.

Durch nichtelliptische Bahn des Steigbeins 20 bzw. des Steigfußes 23 gelangt nun die Transportvorrichtung 10 mit ihren Laufrädern 14 und den Tastarmen 30 in den Bereich der unteren Treppenstufe 35, bis die Tastarme 30 die Treppenstufe 35 kontaktieren (siehe **Fig. 2d**).

Die Bewegung des Steigbeins 20 setzt sich entsprechend **Fig. 2e** fort, bis auch die Laufräder 14 auf der Treppenstufe 35 aufsetzen. Ein dem Kantenbereich K gemäß Fig. 2a entsprechender Kantenbereich K - jedoch in Bezug auf die Treppenstufe 35 - ist auch in der Darstellung gemäß Fig. 2e markiert. Befinden sich die Laufräder 14 - wie in Fig. 2e - außerhalb des Kantenbereich K auf der Treppenstufe 35, so sind auch die Tastarme 30 aus ihrer Nulllage heraus verlagert, sodass die Laufräder 14 freigegeben sind. Die Transportvorrichtung 10 lässt sich somit auf der Treppenstufe 35 rangieren. Sobald jedoch eines der Laufräder 14 den Kantenbereich K erreicht, wird die diesem Laufrad 14 zugeordnete Bremsvorrichtung 28 aktiviert und das jeweilige Laufrad 14 gebremst und/oder blockiert. Aufgrund der voneinander unabhängigen Freigabe bzw. Bremsung der Laufräder 14 ist es somit auch möglich, dass beispielsweise während des Rangierens lediglich eines der Laufräder 14 gebremst oder blockiert und das andere freigegeben ist.

Nach Aufsetzen der Laufräder 14 kann das Steigbein 20 seine Bahn im Wesentlichen lastlos fortsetzen, bis der Zustand gemäß **Fig. 2f** erreicht wird. Dieser Zustand entspricht im Wesentlichen dem Ausgangszustand gemäß Fig. 2a mit dem Unterschied, dass sich nun die Transportvorrichtung 10 anstatt auf der Treppenstufe 34 auf der - in diesem Fall tiefer gelegenen - benachbarten Treppenstufe 35 befindet. Sofern die Laufräder 14 nicht bereits von sich aus innerhalb des Kantenbereichs K der Treppenstufe 35 aufgesetzt sind, können diese bis in den Kantenbereich K hinein rangiert werden, so dass sie wieder durch die jeweilige Bremsvorrichtung 28 gebremst und/oder blockiert und damit gesichert sind.

Durch Wiederholung des Ablaufes gemäß Fig. 2a bis 2f lässt sich somit die Treppe 36 Stufe für Stufe abwärts steigen und die Last 13 mithilfe der Transportvorrichtung 10 abwärts transportieren.

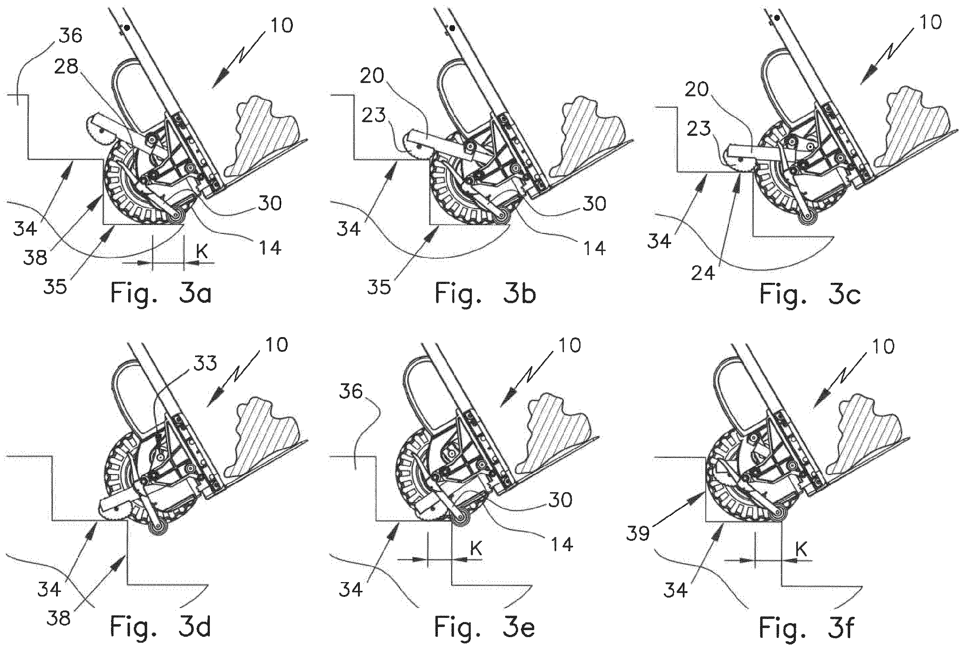

Anhand Fig. 3a bis 3f soll nun das Verfahren zum Aufwärtssteigen der Treppe 36 erläutert werden. Im Wesentlichen wird dazu der vorangehend beschriebene Prozess in umgekehrter Reihenfolge ausgehend von der unteren Treppenstufe 35 durchgeführt.

Während des Aufwärtssteigens zieht der Benutzer dazu die Transportvorrichtung 10 permanent nach hinten bzw. in Richtung der Treppe 36 und balanciert die Transportvorrichtung 35 gegebenenfalls aus.

In einem ersten Schritt wird gemäß **Fig. 3a** die Transportvorrichtung 10 auf der (unteren) Treppenstufe 35 zunächst bis an die Treppenkante 38 der (höher gelegenen) Treppenstufe 34 herangefahren. Da die Tastarme 30 in dieser Phase aus ihrer Nulllage über das Mindestmaß hinaus herausgelenkt sind, können die Laufräder 14 dazu auf der Treppenstufe 35 rangiert werden. Sollte ein Laufrad 14 beim Rangieren doch in den Kantenbereich K der Treppenstufe 35 gelangen, gelangt der jeweilige Tastarm 30 zurück in seine Nulllage, so dass das jeweilige Laufrad 14 mittels der zugeordneten Bremsvorrichtung 28 gebremst und/oder blockiert und damit vor einem Abstürzen gesichert wird.

Das Steigbein 20 kann nun in Gang gesetzt werden und seine Bahn in im Vergleich zum vorangehend geschilderten Prozess umgekehrter Reihenfolge durchlaufen, bis es gemäß dem in **Fig. 3b** dargestellten Zustand mit seinem Steigfuß 23 auf der oberen Treppenstufe 34 aufsetzt. Bis dahin verbleiben die Laufräder 14 mit den ihnen zugeordneten Tastenarmen 30 weiterhin auf der unteren Treppenstufe 35.

Wie aus **Fig. 3c** ersichtlich, zieht nun das Steigbein 20 mit seinem durch die Gummierung 24 rutschfest auf der Treppenstufe 34 aufliegenden Steigfuß 23 die übrige Transportvorrichtung 10 nach oben.

Die Transportvorrichtung 10 überwindet die Treppenkante 38 der Treppenstufe 34, wie aus **Fig. 3d** erkennbar.

Unter anderem in dieser Stellung der Transportvorrichtung 10 gemäß Fig. 3d ist ein Verbindungsstück **33** erkennbar, das die beiden Steigbeine 20 (siehe Fig. 1 und die dortige Beschreibung) mit ihren jeweiligen Steigfüßen 23 (ebenda) verbindet. Das Verbindungsstück 33 ist dazu als Durchgangswelle ausgebildet und durchgreift die Antriebseinheit 22 (Fig. 1).

Im weiteren Verlauf des Treppensteigvorganges setzen sodann die Laufräder 14 der Transportvorrichtung 10 auf der (oberen) Treppenstufe 34 entsprechend **Fig. 3e** auf. Die Laufräder 14 sind nun innerhalb des Kantenbereichs K der Treppenstufe 34 platziert; die Tastarme 30 befinden sich weiterhin in ihrer Nulllage. Die Laufräder 14 bleiben somit zunächst gebremst und/oder blockiert.

Durch Heranziehen der Transportvorrichtung 10 in Richtung der Treppe 36 kann der Benutzer die Laufräder 14 aus dem Kantenbereich K heraus bewegen und diese freigeben.

Die Transportvorrichtung 10 lässt sich nun auf der Treppenstufe 34 rangieren und insbesondere entsprechend **Fig. 3f** bis zu einer nächsten Treppenkante **39** bewegen.

Der Steigvorgang in Aufwärtsrichtung kann nun Stufe um Stufe durch Wiederholen der in Fig. 3a bis Fig. 3f dargestellten Schritte fortgesetzt werden.

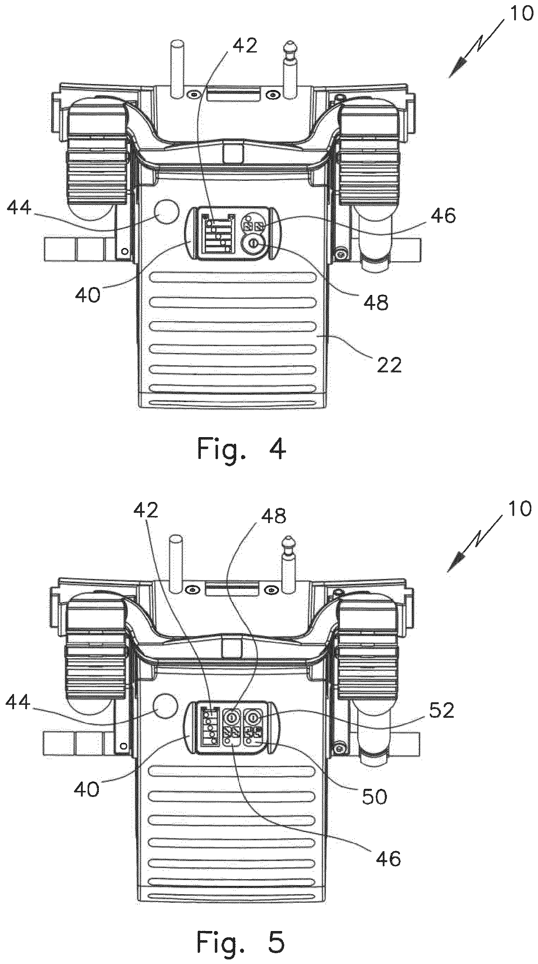

**Fig.** 4 zeigt eine schematische Draufsicht auf die Transportvorrichtung 10. Zu erkennen ist insbesondere eine Ein-/Ausgabeeinheit **40** mit einer Kapazitätsanzeige **42**. Die Ein-/Ausgabeeinheit 40 ist in einem oberen Bereich an einer Außenseite der Antriebseinheit 22 angeordnet. Die Kapazitätsanzeige 42 weist balkenförmig angeordnete, farbige LED auf, mit denen der Ladezustand des wiederaufladbaren Akkumulators 21 (Fig. 1a) abgebildet wird. Dazu sind insbesondere drei obere Balken mit grünen LED, zwei weitere Balken mit gelben LED und ein unterster Balken mit einer roten LED bestückt. Ein höherer Ladezustand wird durch mehr - in aufsteigender Reihenfolge betriebene - leuchtende LED signalisiert. Leuchtet lediglich der unterste rote Balken, so entspricht dies einem Ladezustand, in dem noch ein Steigen von maximal 20 bis 35 Stufen möglich ist.

Die Ein-/Ausgabeeinheit 40 weist ferner einen akustischen Signalgeber **44** auf. Der akustische Signalgeber 44 ist eingerichtet, einen Warnton, insbesondere im Rhythmus von ca. 12 Sekunden, zu erzeugen, wenn der wiederaufladbare Akkumulator 21 einen kritischen Ladezustand - beispielsweise entsprechend einem Aufleuchten des untersten roten Balkens der Kapazitätsanzeige 42 - erreicht und/oder sich in einem solchen kritischen Ladezustand befindet.

Des Weiteren weist die Ein-/Ausgabeeinheit 40 eine Modusanzeige **46** auf. Die Modusanzeige 46 umfasst wiederum eine LED. Ein Leuchten der LED der Modusanzeige 46 signalisiert dabei, dass sich die Transportvorrichtung 10 in einem Einzelstufenmodus befindet. In diesem Einzelstufenmodus ist die Treppensteigvorrichtung 16 (Fig. 1) eingerichtet, nach einem Start eines Steigvorganges jeweils lediglich eine einzelne Stufe aufwärts bzw. abwärts zu steigen und anschließend in einer vorgegebenen Stellung zu stoppen.

Die Stellung kann dazu bereits vorab, insbesondere bei Montage der Transportvorrichtung 10, beispielsweise mittels eines Magneten und/oder eines Hallsensors, festgelegt werden.

Ist dagegen der Einzelstufenmodus deaktiviert und ist damit ein Dauersteigmodus aktiviert, so ist die Treppensteigvorrichtung 16 eingerichtet, nach einem Start einen Steigvorgang Stufe für Stufe ohne Unterbrechung fortzusetzen, bis der Benutzer die Transportvorrichtung 10 bzw. die Treppensteigvorrichtung 16 manuell stoppt.

Die Anwahl des Modus, also des Einzel- oder des Dauersteigmodus, erfolgt dabei durch einen Moduswahlschalter **48**.

Eine alternative Ausführungsform einer Ein-/Ausgabeeinheit 40 zeigt **Fig. 5****,** ebenfalls in einer Draufsicht auf die Transportvorrichtung 10.

Diese Ausführungsform der Ein-/Ausgabeeinheit 40 entspricht weitgehend der Ausführungsform gemäß Fig. 4. Auch sie weist eine Kapazitätsanzeige 42, einen akustischen Signalgeber 44, eine Modusanzeige 46 und einem Moduswahlschalter 48 auf. Zusätzlich umfasst sie jedoch auch noch eine Steigmodusanzeige **50** mit einem Steigmoduswahlschalter **52**.

Mit dem Steigmoduswahlschalter 52 lässt sich ein Steigmodus der Treppensteigvorrichtung 16 (Fig. 1) auswählen und mit der Steigmodusanzeige 50 lässt sich dieser Steigmodus anzeigen. Insbesondere lässt sich ein Komfort-Modus an- oder abwählen, in dem das Steigbein 20 (Fig. 1) mit unterschiedlichen Geschwindigkeiten betrieben wird, um ein besonders sanftes Auf- bzw. Absteigen zu ermöglichen.

Bei gewähltem Komfort-Modus wird insbesondere das Steigbein 20 kurz vor Aufsetzen auf einer Treppenstufe auf eine vordefinierte, reduzierte Geschwindigkeit abgebremst.

**Fig. 6** zeigt eine Draufsicht auf eine Seite der bereits in Bezug auf Fig. 1a erwähnten, im Bereich des Griffelements 15 (Fig. 1a) angeordneten Steuerelementeanordnung 54.

Die Steuerelementeanordnung 54 weist einen als Kippschalter ausgebildeten Ein/Ausschalter **56,** einem ebenfalls als Kippschalter ausgebildeten Richtungswahlschalter **58** zur Auswahl der Steigrichtung (aufwärts oder abwärts) sowie ein Drehwahlelement **60** zur stufenlosen Einstellung der Geschwindigkeit des Steigvorganges auf. Das Drehwahlelement 60 ist als Potentiometer ausgebildet.

**Fig. 7** zeigt eine der Seite gemäß Fig. 6 gegenüberliegende Seite der Steuerelementeanordnung 54. Auf dieser Seite der Steuerelementeanordnung 54 ist ein Starttaster **62** angeordnet, der zum Starten eines Steigvorgangs eingerichtet ist.

Die Steuerelementeanordnung 54 oder zumindest ein Teil der Steuerelementeanordnung 54 können als Folientastatur ausgebildet sein. Insbesondere können der Ein/Ausschalter 56, der Richtungswahlschalter 58 und/oder das Drehwahlelement 60 als Folienelement bzw. als Folienelemente ausgebildet sein. Alternativ oder ergänzend können die Steuerelementeanordnung 54 oder zumindest ein Teil der Steuerelementeanordnung 54 auch als Touch Screen ausgebildet sein. Denkbar ist insbesondere, dass eines oder mehrere der Elemente 56, 58 und/oder 60 auf dem Touch Screen angezeigt werden und z. B. durch Berührung des Touch Screens eingestellt werden können. Durch Verwendung einer Folientastatur und/oder eines Touch Screens kann dabei das Risiko einer versehentlichen (Fehl-)Bedienung der Steuerelementeanordnung 54 bzw. eines ihrer Elemente 56, 58 und/oder 60, insbesondere während eines Steigvorganges, reduziert werden.

Der Benutzer kann somit die Transportvorrichtung 10, insbesondere die Treppensteigvorrichtung 16, jederzeit umfassend kontrollieren und steuern, ohne seine Hände aus dem Bereich des Griffelements 15 zu entfernen. Insbesondere kann er mit den durch die Steuerelementeanordnung 54 gegebenen Wahlmöglichkeiten einen Steigvorgang starten, unterbrechen, stoppen und/oder in der Geschwindigkeit regulieren.

Insbesondere kann der Benutzer einen Steigvorgang auch innerhalb eines Wechsels von einer Stufe zu einer anderen Stufe, sowohl bei einem Aufals auch bei einem Abstieg, unterbrechen und/oder stoppen, indem er den Ein-/Ausschalter 56 (Fig. 6) betätigt. Mit anderen Worten lässt sich der Ein-/Ausschalter 56 auch als Not-Aus-Schalter zur Unterbrechung eines Steigvorganges verwenden. Da sich dieser im Bereich des Griffelements 15, d. h. in einem oberen Bereich des Tragrahmens 12 (Fig. 1), befindet, lässt sich dieser Ein-/Ausschalter 56 selbst bei voluminösen Lasten 13 (Fig. 1) problemlos erreichen und betätigen.

### Bezugszeichenliste

- 10: Transportvorrichtung
- 12: Tragrahmen
- 13: Last
- 14: Laufrad
- 15: Griffelement
- 16: Treppensteigvorrichtung
- 18: Kurbelantrieb
- 20: Steigbein
- 21: Akkumulator
- 22: Antriebseinheit
- 23: Steigfuß
- 24: Gummierung
- 26: Lagerpunkt
- 28: Bremsvorrichtung
- 29: Positionserfassungsvorrichtung
- 30: Tastarm
- 32: Tastrolle
- 33: Verbindungsstück
- 34, 35: Treppenstufe
- 36: Treppe
- 38, 39: Treppenkante
- 40: Ein-/Ausgabeeinheit
- 42: Kapazitätsanzeige
- 44: akustischer Signalgeber
- 46: Modusanzeige
- 48: Moduswahlschalter
- 50: Steigmodusanzeige
- 52: Steigmoduswahlschalter
- 54: Steuerelementeanordnung
- 56: Ein-/Ausschalter
- 58: Richtungswahlschalter
- 60: Drehwahlelement
- 62: Starttaster

- K: Kantenbereich

## Patentansprüche

1. Transportvorrichtung (10), insbesondere Sackkarre, zum Transport einer Last (13) auf einer Treppe (36) mit einem Tragrahmen (12) zur Aufnahme der Last (13), mit wenigstens einem in einem unteren Bereich des Tragrahmens (12) angeordneten Laufrad (14) und mit einer vorsteigenden Treppensteigvorrichtung (16) zum Auf- und/oder Abwärtssteigen einer Treppe (36), wobei die Treppensteigvorrichtung (16) wenigstens ein kurbelgetriebenes Steigbein (20) umfasst,
**dadurch gekennzeichnet,**
**dass** die Treppensteigvorrichtung (16) eine steuerbare Bremsvorrichtung (28) umfasst, wobei die Bremsvorrichtung (28) eingerichtet ist, das Laufrad (14) steuerbar freizugeben, zu bremsen und/oder zu blockieren.

2. Transportvorrichtung nach Anspruch 1, **dadurch gekennzeichnet, dass** die Treppensteigvorrichtung (16) eine Positionserfassungsvorrichtung (29) aufweist, die eingerichtet ist, die Position des Laufrads (14) relativ zu einer Treppenstufe (34, 35) zu detektieren, wobei die Positionserfassungsvorrichtung (29) vorzugsweise eingerichtet ist zu detektieren, ob sich das Laufrad (14) in einem vordefinierten Kantenbereich (K) um eine Treppenstufenkante (38, 39) befindet.

3. Transportvorrichtung nach einem der vorhergehenden Ansprüche,
**dadurch gekennzeichnet, dass** die Positionserfassungsvorrichtung (29) als Tastarm (30), vorzugsweise mit einer an einem freien Ende des Tastarms (30) angeordneter Tastrolle (32), ausgebildet ist und/oder einen solchen aufweist.

4. Transportvorrichtung nach einem der vorhergehenden Ansprüche,
**dadurch gekennzeichnet, dass** die Positionserfassungsvorrichtung (29) zur Steuerung der Bremsvorrichtung (28) mit dieser wirkverbunden ist.

5. Transportvorrichtung nach einem der vorhergehenden Ansprüche,
**dadurch gekennzeichnet, dass** die Bremsvorrichtung (28) als Klemmkörperbremse ausgebildet ist und/oder eine solche aufweist.

6. Transportvorrichtung nach einem der vorhergehenden Ansprüche,
**dadurch gekennzeichnet, dass** die Transportvorrichtung (10) wenigstens zwei Laufräder (14) aufweist, wobei jedes Laufrad (14) durch eine ihm zugeordnete Bremsvorrichtung (28) der Treppensteigvorrichtung (16) unabhängig vom anderen Laufrad (14) steuerbar freigebbar, bremsbar und/oder blockierbar ist.

7. Transportvorrichtung nach einem der vorhergehenden Ansprüche,
**dadurch gekennzeichnet, dass** die Transportvorrichtung (10) wenigstens zwei, jeweils einem der Laufräder (14) zugeordnete Positionserfassungsvorrichtungen (29) zur unabhängigen Erfassung der Position des jeweils zugeordneten Laufrads (14) aufweist.

8. Transportvorrichtung nach einem der vorhergehenden Ansprüche,
**dadurch gekennzeichnet, dass** am Steigbein (20) ein starrer Steigfuß (23) angeordnet ist, wobei der Steigfuß (23), vorzugsweise an wenigstens einer Bodenkontaktseite, aus rutschfestem Material, insbesondere einer Gummierung (24), ausgebildet ist und/oder ein solches aufweist.

9. Transportvorrichtung nach einem der vorhergehenden Ansprüche,
**dadurch gekennzeichnet, dass** eine Steuerelementeanordnung (54) zur Steuerung des Treppenaufstiegs und/oder Treppenabstiegs im Bereich eines Griffelements (14) am Tragrahmen (12) angeordnet ist.

10. Transportvorrichtung nach einem der vorhergehenden Ansprüche,
**dadurch gekennzeichnet, dass** die Steuerelementeanordnung (54) ein Steuerelement, insbesondere einen Ein-/Ausschalter (56), einen Richtungswahlschalter (58), ein Drehwahlelement (60) zur Geschwindigkeitseinstellung und/oder einen Starttaster (62), zur Steuerung des Starts, des Endes und/oder der Geschwindigkeit des Treppenauf- und/oder -abstiegs umfasst.

11. Transportvorrichtung nach einem der vorhergehenden Ansprüche,
**dadurch gekennzeichnet, dass** die Geschwindigkeit des Treppenauf- und/oder -abstiegs, insbesondere mittels des Drehwahlelements (62), stufenlos einstellbar ist.

12. Transportvorrichtung nach einem der vorhergehenden Ansprüche,
**dadurch gekennzeichnet, dass** die Treppensteigvorrichtung (16) wenigstens zwei Steigfüße (23) aufweist, wobei vorzugsweise die wenigstens zwei Steigfüße (23) über wenigstens ein Verbindungsstück (33) unmittelbar und/oder mittelbar miteinander verbunden sind.

13. Transportvorrichtung nach einem der vorhergehenden Ansprüche,
**dadurch gekennzeichnet, dass** die Treppensteigvorrichtung (16) in einem Einzelstufenmodus betreibbar ist.

14. Transportvorrichtung nach einem der vorhergehenden Ansprüche,
**dadurch gekennzeichnet, dass** die Treppensteigvorrichtung (16) eingerichtet ist, innerhalb eines Steigzyklus einen Kurbelantrieb (18) des kurbelgetriebenen Steigbeins (20) mit wenigstens zwei verschiedenen Geschwindigkeiten anzutreiben.

15. Verfahren zum Transport einer Last (13) auf einer Treppe (36) mit einer Transportvorrichtung (10), insbesondere einer Sackkarre, mit einem Tragrahmen (12) zur Aufnahme der Last (13), mit wenigstens einem in einem unteren Bereich des Tragrahmens (12) angeordneten Laufrad (14) und mit einer vorsteigenden Treppensteigvorrichtung (16) zum Auf- und/oder Abwärtssteigen einer Treppe (36), wobei die Treppensteigvorrichtung (16) ein kurbelgetriebenes Steigbein (20) umfasst,
**dadurch gekennzeichnet,**
**dass** das Laufrad (14) mittels einer steuerbaren Bremsvorrichtung (28) gebremst und/oder blockiert wird, sobald sich das Laufrad (14) auf einer Treppenstufe (34, 35) der Treppe in einem vordefinierten Kantenbereich (K) um eine
Treppenstufenkante (38, 39) der Treppenstufe (34, 35) befindet und/oder diesen erreicht.
